# EUROPÄISCHE PATENTSCHRIFT

(11) **EP 1 055 329 B1**
(45) Veröffentlichungstag und Bekanntmachung des Hinweises auf die Patenterteilung: **04.02.2004**
(21) Anmeldenummer: 99907530.2
(22) Anmeldetag: 10.02.1999
(51) Int. Cl.: H04N 7/16

(54) **MULTIMEDIALES SYSTEM, TRAGBARE BEDIENEINRICHTUNG UND KOMMUNIKATIONSMODUL ZUR VERWENDUNG IN DIESEM SYSTEM**
MULTIMEDIA SYSTEM, PORTABLE OPERATING DEVICE AND COMMUNICATION MODULE FOR USE IN SAID SYSTEM
SYSTEME MULTIMEDIA, DISPOSITIF D'UTILISATION PORTABLE ET MODULE DE COMMUNICATION S'UTILISANT DANS CE SYSTEME

(30) Priorität: 10.02.1998 DE 29802270 U
(43) Veröffentlichungstag der Anmeldung: 29.11.2000
(60) Teilanmeldung: 03027432.8
(73) Patentinhaber: SCM Microsystems GmbH, 85737 Ismaning (DE)
(72) Erfinder: NEIFER, Wolfgang, D-85354 Freising (DE)
(74) Vertreter: Degwert, Hartmut, Dipl.-Phys.
(86) Internationale Anmeldenummer: PCT/EP1999/000862
(87) Internationale Veröffentlichungsnummer: WO 1999/041909

(56) Entgegenhaltungen:
- EP-A- 0 811 940
- WO-A-97/38530
- DE-U- 9 417 937
- FR-A- 2 696 888
- "The Regulation of Conditional Access Services for Digital Television" RETRIEVED FROM THE INTERNET, 26. Februar 1997, Seiten 1-10, XP002105345 http://www.dti.gov.uk/digital/main.html
- I OKOTH ET AL: "DVB: Common Interface als ideale interaktive Multimedia-Umgebung" FERNSEH UND KINOTECHNIK, Bd. 51, Nr. 12, 1. Januar 1997, Seiten 854-856, XP002088534

## Beschreibung

Die vorliegende Erfindung betrifft ein multimediales System gemäß dem Oberbegriff des Anspruchs 1.

In der Zeitschrift "Funkschau", Ausgabe 16, 1997, Seiten 61 bis 63 ist eine Set-Top-Box für das digitale Fernsehen (DVB) zur Verwendung in einem multimedialen System mit Fernsehgerät, Satelliten-Schüssel, Telefonanschluß usw. beschrieben. Die bekannte Set-Top-Box hat eine offene Schnittstelle mit mehreren Steckplätzen, die nach dem Common-Interface (CI)-Standard für digitales Fernsehen (DVB-CI-Standard) ausgelegt ist, der wiederum ein Unterstandard des PC-Card-Standards bzw. PCMCIA-Standards (PCMCIA = Personal Computer Memory Card International Association) ist. In die Steckplätze können CAM-Module (CAM = Conditional Access Modul) nach dem PC-Card-Standard als Zugriffskontroll-Module für digitales Fernsehen mit und ohne Pay-TV oder Pay-on-Demand eingeschoben werden. Neben ein oder mehreren CAM-Modulen für digitales Fernsehen können je nach Bedarf z.B. ein Kommunikationsmodul, ein Modul für Bankanwendungen, ein oder mehrere Speichermodule usw. in weitere Steckplätze der offenen Schnittstelle eingesteckt werden, die nach dem DVB-CI Standard ausgelegt sind.

In der im Internet erschienenen Veröffentlichung "The Regulation of Conditional Access Services for Digital Television" (http://www.dti.gov. uk/digital/main.html, 1997) ist ein gattungsgemäßes multimediales System beschrieben, bei dem eine Fernbedienung mit einem Modem in einer Set-Top-Box verbunden ist. Mit der Fernbedienung können bestimmte Dienste innerhalb einer elektronischen Programmzeitschrift abgefragt werden.

Die EP-A-0 811 940 zeigt ein System mit einem Rechner zur Bereitstellung von Internet-Diensten, der über eine Fernbedienung gesteuert wird.

Aus der FR-A-2 696 888 ist eine Fernbedieneinrichtung mit einem Chipkarten-Leser bekannt.

Eine Fernbedieneinrichtung mit der Möglichkeit zur Verschlüsselung der übertragenen Daten ist aus der FR-A-2 745 965 bekannt

Der Artikel I OKOTH ET AL: 'DVB: Common Interface als ideale interaktive Multimedia-Umgebung' FERNSEH UND KINOTECHNIK, Bd. 51, Nr. 12, 1. Januar 1997, Seiten 854-856, beschreibt eine modular aufgebaute Set-Top Box mit Common Interface (CI) Anschlüssen zur Aufnahme von Zusatzmodulen, so daß damit die Funktionalität der Box erweitert werden kann. Unter anderem können Multimedia-Anwendungen und Internetdienste implementiert werden.

Aufgabe der vorliegenden Erfindung ist es, ein multimediales System bereit zustellen, bei dem die Auslegung der Basisstation unabhängig von den Anforderungen für die Bedienung des Kommunikationsmoduls ist, insbesondere im Hinblick auf eine effiziente und komfortabel steuerbare Nutzung von Internet-Diensten. Diese Aufgabe wird durch ein multimediales System der eingangs genannten Art mit den Merkmalen des kennzeichnenden Teils des Anspruchs 1 gelöst.

Das erfindungsgemäße multimediale System beinhaltet eine Empfangseinrichtung für multimediale Sendungen, eine Anzeigeeinrichtung, z.B. ein Fernsengerät, einen Monitor, ein LCD-Display oder ähnliches, zur graphischen Darstellung multimedialer Inhalte, eine Basisstation, z.B. eine Set-Top-Box, die eine offene Schnittstelle für austauschbare Zugriffskontroll-Module beinhaltet, und ein an diese offene Schnittstelle anschließbares Kommunikationsmodul sowie eine tragbare Bedieneinrichtung, die diesem Kommunikationsmodul zugeordnet ist. Die Basisstation benötigt keine gesonderten Bedienelemente für die Bedienung des Kommunikationsmoduls.

Somit erbringt die vorliegende Erfindung den entscheidenden Vorteile daß die Basisstation bzw. Set-Top-Box nur die offene Schnittstelle für das Kommunikationsmodul bereitstellt, wohingegen dessen Funktionen von einer tragbaren Bedieneinrichtung, z.B. von einer Fernsteuerung, gesteuert werden. Da die Steuerung der Funktionen des Kommunikationsmoduls im erfindungsgemäßen multimedialen System mit einer eigenen tragbaren Bedieneinrichtung, die dem Kommunikationsmodul zugeordnet ist, ausgeführt wird und sowohl die tragbare Bedieneinrichtung als auch der von ihr steuerbare Kommunikationsmodul eigenständige Komponenten sind, ist die Auslegung der Set-Top-Box vollkommen davon unabhängig, ob überhaupt ein Kommunikationsmodul verwendet wird, welches Kommunikationsmodul verwendet wird und wie das Kommunikationsmodul gesteuert bzw. bedient wird. Dennoch kann bei der Bedienung des Kommunikationsmoduls von den Anzeigefunktionen der Anzeigeeinrichtung des multimedialen Systems Gebrauch gemacht werden.

Das Kommunikationsmodul weist zudem ein Modem auf, das z.B. ein Telefonmodem oder ein Datenfunkmodem sein kann. Vorzugsweise arbeitet das Datenfunkmodem nach dem DECT-Verfahren oder dem GSM-Verfahren.

Ein Kommunikationsmodul mit Datenfunkmodem ermöglicht eine erheblich höhere Datenübertragungsrate als die einfache Telefonmodemfunktion der üblicherweise in Set-Top-Boxen vorgesehenen Standard-Modems. Der Datenfunk ermöglicht damit auch einen weiteren, von den Fernsehkanälen unabhängigen, vollwertigen "Vorwärtskanal", also eine Datenübertragung mit hoher Datenübertragungsrate vom übergeordneten Netz zum jeweiligen Benutzer. Der "Rückkanal" kann weiterhin über das Standard-Modem abgewickelt werden, alternativ aber ebenfalls über das Kommunikationsmodul bereitgestellt werden.

Das Kommunikationsmodul weist auch einen Internet-Computer auf. Der Ausdruck "Internet-Computer" umfaßt hier allgemein sämtliche Hardware- und Softwarekomponenten, die für eine Internetkommunikation erforderlich sind. Dazu gehört z.B. ein Mikroprozessor mit entsprechenden Speichern, ein Bussystem und ein Modem mit Telefonanschluß oder Funkschnittstelle als Hardwarekomponenten. Ein Betriebssystem mit Web-Browser und/oder Javaengine sind hier als wichtigste Softwarekomponenten zu nennen.

Das Kommunikationsmodul kann eine Zugriffskontrollfunktion haben, die z.B. durch eine auswechselbare Chipkarte oder Multimediakarte oder ähnliches realisiert werden kann. Vorzugsweise ist das Kommunikationsmodul als steckbare PC-Karte nach dem PCMCIA-Standard ausgelegt.

Das Kommunikationsmodul als PC-Karte kann wiederum nach Art eines CAM-Moduls (CAM = Conditional Access Modul) für die Aufnahme und Funktion einer Chipkarte ausgelegt sein. Durch die Chipkarte kann dann z.B. eine Zugangskontrollfunktion zur Datenfunkfunktion des Kommunikationsmoduls realisiert werden.

Das Kommunikationsmodul ist vorzugsweise mit der tragbaren Bedieneinrichtung des erfindungsgemäßen multimedialen Systems drahtlos gekoppelt. Diese drahtlose Kopplung kann z.B. durch eine Kopplung mit Infrarotstrahlung ausgeführt sein. Das Kommunikationsmodul ist dann mit einer Infrarot-Empfangseinheit oder einer Infrarot-Sende/Empfangseinheit versehen. Die tragbare Bedieneinrichtung umfaßt dann einen Infrarot-Sender bzw. eine Infrarot-Sende/Empfangs-Einheit.

Die tragbare Bedieneinrichtung des multimedialen Systems kann eine Schnittstelleneinrichtung zur Aufnahme und Auswertung einer Chipkarte haben, um eine Zugriffskontrollfunktion in der tragbaren Bedieneinrichtung zu realisieren.

Die tragbare Bedieneinrichtung des multimedialen Systems der Erfindung kann eine Eingabeeinheit haben, mit der Zeigerinformationen und Auslöseinformation als Steuerinformationen benutzerdefiniert erzeugt werden können, um bestimmte Anzeigeinformationen auf der Anzeigeeinrichtung des multimedialen Systems auszuwählen. Die Eingabeeinheit der tragbaren Bedieneinrichtung hat vorzugsweise eine Trackball-Einrichtung, ein Scrollrad, einen Cursorblock oder ähnliches, um einen Zeiger oder Cursor auf der Anzeigeeinrichtung nach Muster einer Maus auf dem angezeigten Bildschirm bewegen und positionieren zu können. Die Eingabeeinheit kann weiterhin eine Taste haben, um die Bestätigung der Auswahl nach Muster einer Klick-Taste oder eines Doppelklicks einer Maus einzugeben.

Die tragbare Bedieneinrichtung kann z.B. auch eine Infrarot-Maus sein, die vorzugsweise mit einer Zugriffskontrollfunktion versehen ist. Diese Zugriffskontrollfunktion der Infrarot-Maus kann wiederum mit einem Chipkartenleser und einer dazu gehörigen Chipkarte, die einfach in eine entsprechende Aufnahme der Infrarot-Maus einsteckbar ist, realisiert werden.

Die tragbare Bedieneinrichtung oder Fernsteuerung kann auch mit einem alphanumerischen Tastenfeld versehen sein, um Befehle und Adressen sowie Steuerkommandos für den Kommunikationsmodul in der Set-Top-Box eingeben zu können.

Mit der Zugriffskontrollfunktion der Chipkarte in der tragbaren Bedieneinrichtung kann eine zusätzliche Bestell- und Bezahlfunktion eingerichtet werden, die z.B. in einer Standard-Set-Top-Box nicht vorgesehen ist, aber zusätzlich bei bestimmten Anwendungen erforderlich ist. Eine solche Anwendung ist z.B. die Bezahl- und/oder Bestellfunktion, z.B. über Internet, die mit der Zugriffskontrollfunktion der tragbaren Bedieneinrichtung freigegeben werden können. Diese zusätzliche Zugriffskontrollfunktion oder Freigabefunktion kann auch durch eine zusätzliche zweite Chipkarte im Kommunikationsmodul eingerichtet werden. Das Kommunikationsmodul verfügt dann über entsprechende Einrichtungen zur Realisierung dieser beiden, unterschiedlichen Zugriffskontrollfunktionen. Ist das Kommunikationsmodul als einsteckbare PC-Karte ausgelegt, verfügt es in diesem Fall über eine entsprechend ausgelegte Schnittstelle zur Aufnahme und Auswertung von zwei Chipkarten, also einen doppelten Kartenleser.

Die tragbare Bedieneinrichtung hat bevorzugt eine Verschlüsselungseinrichtung, um die Steuerinformationen für das Kommunikationsmodul in der Set-Top-Box verschlüsseln zu können. Die Verschlüsselungseinrichtung kann auf der auswechselbaren Chipkarte integriert sein, die in die tragbare Bedieneinrichtung eingesteckt wird.

Entsprechend hat dann auch das Kommunikationsmodul eine Entschlüsselungseinrichtung, die die von der tragbaren Bedieneinrichtung ausgesendeten, verschlüsselten Nachrichten bzw. Steuerinformationen entschlüsselt. Die Entschlüsselungseinrichtung kann z.B. in der PC-Karte integriert sein oder auf der auswechselbaren Chipkarte der PC-Karte untergebracht sein, wenn das Kommunikationsmodul als PC-Karte ausgelegt ist.

Ist eine bidirektionale Kommunikation zwischen der tragbaren Bedieneinrichtung und dem Kommunikationsmodul in der Set-Top-Box vorgesehen, kann das Kommunikationsmodul einen Verschlüssler für die Nachrichten zu der tragbaren Bedieneinrichtung haben, die dann wiederum einen Entschlüssler für die vom Kommunikationsmodul zugesendeten verschlüsselten Nachrichten hat.

Das Kommunikationsmodul und/oder die tragbare Bedieneinrichtung des erfindungsgemäßen multimedialen Systems können eine Benutzeridentifiziereinheit haben, insbesondere ein SIM-Modul (SIM = Subscriber Identification Modul) oder ein SAM-Modul (Subscriber Access Modul) haben. Damit kann über das Kommunikationsmodul auch eine Autorisierung von Verbindungen für Banking oder E-Kommerz über eine abgesicherte Geräte-Identifikation neben der Kundenidentifikation eingerichtet werden. Zusätzlich oder alternativ kann die Identifikation mittels eines Fingerabdruck-Sensors erfolgen, der an der Oberseite des Bediengeräts angeordnet ist.

Weitere vorteilhafte Weiterbildungen des erfindungsgemäßen multimedialen Systems sind den Unteransprüchen zu entnehmen.

Eine zum multimedialen System gehörige tragbare Bedieneinrichtung, insbesondere Fernsteuervorrichtung, zur Erzeugung und Übertragung von Steuerinformationen zur Steuerung eines Kommunikationsmoduls und/oder einer Anzeigeeinrichtung, insbesondere eines Fernsehgeräts mit Set-Top-Box, kann eine Eingabeeinheit zum Eingeben von Informationen, eine Verarbeitungseinheit, insbesondere einen Mikroprozessor, zum Verarbeiten der Informationen und zum Erzeugen der Steuerinformationen, eine Sende/Empfangseinheit, die die Steuerinformationen in Steuersignale umsetzt und an das Kommunikationsmodul und/oder die Anzeigeeinrichtung sendet, und ein auswechselbares Zugriffskontroll-Modul umfassen, das die Erzeugung der Steuerinformationen und/oder die Sendung der Steuersignale kontrolliert.

Mittels einer solchen Bedieneinrichtung kann z.B. eine zusätzliche Zugriffsfunktion, z.B. eine Bestell- und Bezahlfunktion, z.B. eine Banking- oder E-Kommerz-Funktion usw. des multimedialen Systems realisiert werden.

Weitere Vorteile, vorteilhafte Weiterbildungen und Anwendungsmöglichkeiten der vorliegenden Erfindung sind aus der nachfolgenden Beschreibung von Ausführungsformen der Erfindung in Verbindung mit den beiliegenden Zeichnungen ersichtlich. Es zeigen:
Figur 1 eine Ausführungsform des multimedialen Systems der Erfindung;
Figur 2 eine schematische Darstellung einer Set-Top-Box als Basisstation, die in dem erfindungsgemäßen, multimedialen System der Figur 1 verwendet werden kann, mit einem Kommunikationsmodul und einem herkömmlichen CAM-Modul;
Figur 3 eine perspektivische Ansicht des Kommunikationsmoduls der Figuren 1 und 2, der als PC-Karte mit Chipkarte ausgelegt ist;
Figur 4 eine perspektivische Ansicht einer weiteren Ausführungsform des Kommunikationsmoduls, der hier für eine Multimediacard ausgelegt ist; und
Figur 5 eine perspektivische Ansicht einer dritten Ausführungsform des Kommunikationsmoduls mit Telefonsteckverbinder.

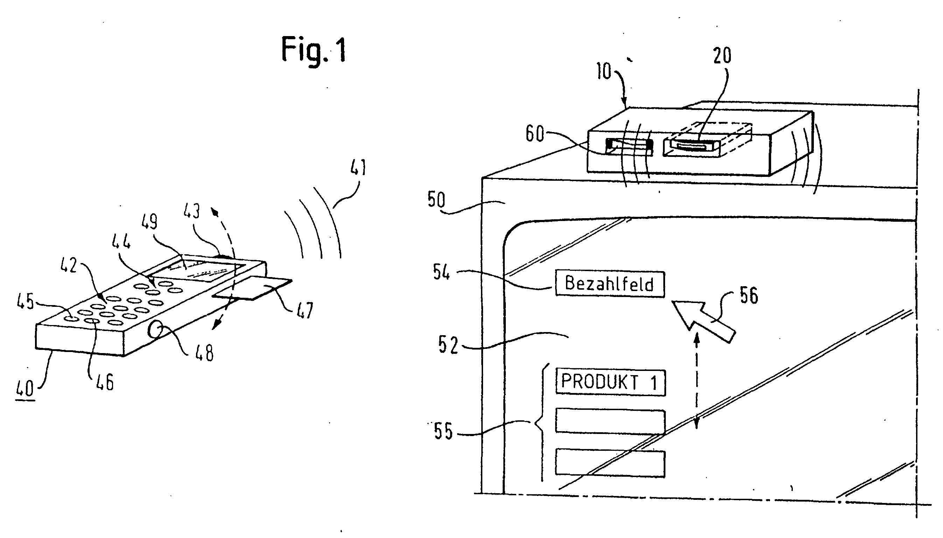

In der Figur 1 ist eine Ausführungsform des erfindungsgemäßen multimedialen Systems mit einer tragbaren Bedieneinrichtung 40, einer Set-Top-Box 10 als Basisstation und einem Fernsehgerät 50 als Anzeigeeinrichtung gezeigt, das einen Bildschirm 52 hat.

Die Set-Top-Box 10 verfügt über die üblichen Anschlüsse, Komponenten und Schnittstellen (nicht gezeigt), wie sie z.B. für Satellitenempfang, Kabelfernsehen, Videorecorder usw., erforderlich sind, und ist für den Empfang und die Umsetzung digitaler Fernsehsignale ausgelegt. Der Empfangsteil oder die Empfangseinrichtung der Set-Top-Box 10 verfügt über einen Satelliten-Tuner, einen MPEG-2-Decoder, einen Demodulator und einen Demultiplexer usw., also die üblichen Komponenten für den Empfang digitalen Fernsehens. Die Set-Top-Box 10 hat weiterhin eine zentrale Steuereinheit 13, die sämtliche Daten und Signalströme in der Set-Top-Box 10 verwaltet und steuert und die üblicherweise einen Mikroprozessor mit Betriebssystem und weiteren Hardwarekomponenten, z.B. Halbleiterspeicher, RAM und ROM, Bussystem für Daten-, Adressen- und Steuersignalen usw., umfaßt. Die Set-Top-Box 10 hat weiterhin eine CI-Schnittstelleneinrichtung 12 als offene Schnittstelle nach dem DVB-CI-Standard, der ein Unterstandard des PCMCIA-Standards ist, geläufiger auch als PC-Card-Standard bezeichnet, und ist für die Verarbeitung eines MPEG-2-Datenstroms mit 70 Mbit/s ausgelegt, der bei der Verarbeitung von digitalen Fernsehsignalen in der Set-Top-Box 10 auftritt. Ausgangsseitig ist die Set-Top-Box 10 mit einer üblichen Digital/Analog-Umsetzer-Schaltung (nicht gezeigt) versehen, die das digitale MPEG-Fernsehsignal in ein analoges Fernsehsignal, z.B. RGB-Signal oder FBAS-Signal, umsetzt, das von dem Fernsehgerät 50 angezeigt werden kann. Die Set-Top-Box 10 hat weiterhin ein Standard-Telefonmodem 11 mit Telefonanschluß.

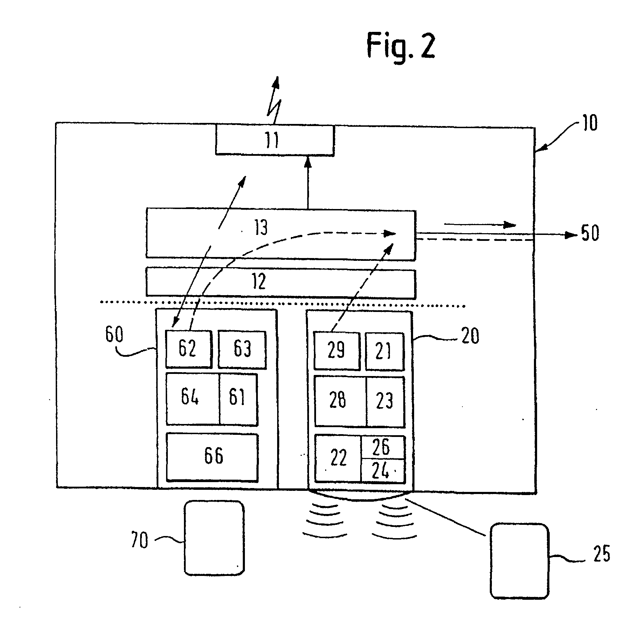

Die gezeigte Set-Top-Box 10 (vgl. auch Figur 2) hat mindestens zwei Steckplätze für PC-Karten nach dem DVB-CI-Standard. In einem der Steckplätze ist ein übliches CAM-Modul 60 als Zugriffskontroll-Modul eingeschoben. Das CAM-Modul 60 dient dazu, ein verschlüsseltes, digitales Fernsehsignal zu entschlüsseln bzw. zu descrambeln. Das CAM-Modul 60 umfaßt deshalb im wesentlichen einen Descrambler 66 mit einem Conditional Access Prozessor, der das verschlüsselte digitale Fernsehsignal descrambelt, eine CAM-Steuereinheit 64, z.B. eine Microcontroller, der die Funktionen des CAM-Moduls 60 verwaltet und steuert, einen Speicher 63, z.B. einen Flash-Memory, in dem wichtige Parameter und Daten für den Descrambelvorgang gespeichert sind, und eine Smartcard-Schnittstelle 61, die die Schnittstelle zu einer Smartcard 70 bereitstellt, die z.B. nach dem ISO 7816 Smartcard-Standard ausgelegt ist. Ein Descrambeln des verschlüsselten, digitalen Fernsehsignals im digitalen MPEG-2-Datenformat kann nur mit der zugeordneten, in das CAM-Modul 60 eingesteckten Smartcard 70 erfolgen. Das CAM-Modul hat weiterhin eine CI-Schnittstelle 62, die die Verbindung des CAM-Moduls 60 mit der DVB-CI-Schnittstelleneinrichtung 12 der Set-Top-Box 10 herstellt.

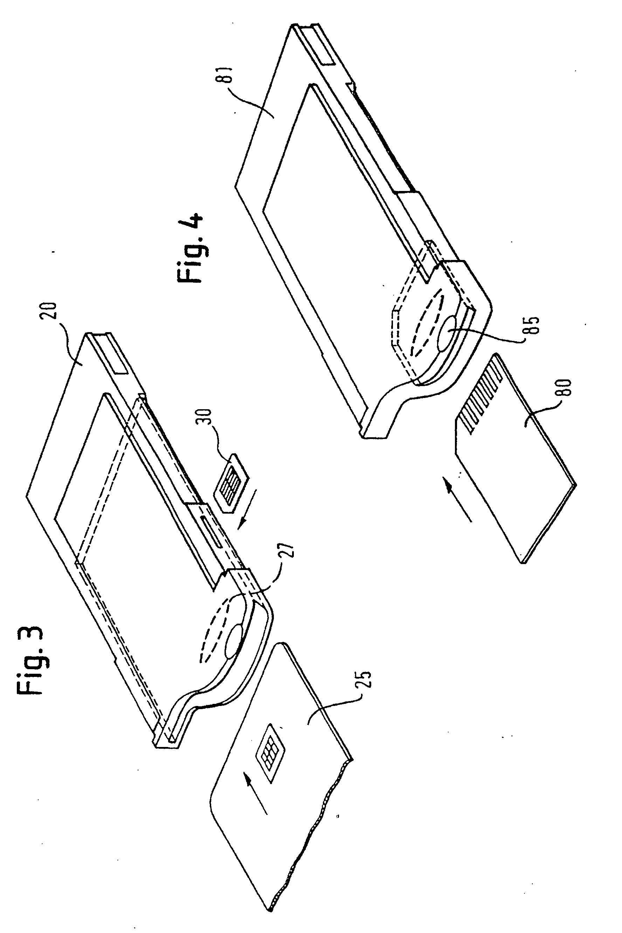

In den zweiten Steckplatz der Set-Top-Box 10 ist eine weitere PC-Karte eingesteckt, die als Kommunikationsmodul 20 (vgl. auch die Figur 3) ausgelegt ist. Das Kommunikationsmodul 20 umfaßt ein vollständiges Datenfunkmodem 24 mit Funkantenne 27, Hochfrequenz-Sende/Empfangs-Teil, Modemsteuerung, Demodulatoren und Modulatoren und Schnittstellen zur weiteren Verarbeitung. Das Datenfunkmodem 24 ist z.B. gemäß dem DECT-Standard oder dem GSM-Standard aufgebaut und dient zum Senden und Empfangen von Funkdaten in bidirektionaler Kommunikation. Das Kommunikationsmodul 20 umfaßt weiterhin eine Infrarot-Sende/Empfangseinheit 22 zur drahtlosen Kopplung bzw. Kommunikation mit einer tragbaren Bedieneinrichtung 40, und eine Steuereinheit 28, die im wesentlichen einen Mikroprozessor, ROM/RAM-Speicher, ein Bussystem zum Verteilen von Adressen-, Daten- und Steuersignalen und Schnittstellen zur Verbindung mit dem anderen Komponenten des Kommunikationsmoduls 20 hat. Die Steuereinheit 28 hat die Funktion eines Internet-Computers, mit dessen Hilfe die Kommunikation ins Internet bzw. World Wide Web aufgebaut, gesteuert und verwaltet wird. In der Steuereinheit 28 sind ein Betriebssystem, Browsersoftware, eine JAVA-Engine und Modem-Kommunikations-Software eingerichtet, um die Funktionen eines Internet-Computers erfüllen zu können. Ein Dekompressor 21 des Kommunikationsmoduls 20 setzt die vom Datenfunkmodem 24 bereitgestellten, digitalen Empfangsdaten in dekompremierte Daten um, die von der Steuereinheit 28 weiter verarbeitet werden. Ein Konverter 23 setzt unter der Steuerung der Steuereinheit 28 die Bild-, Ton- und Textdaten, die über das Datenfunkmodem 24 aus dem Internet empfangen werden und somit in dem Format der World Wide Web-Seiten, im HTTP-Format, oder in einem Computerformat vorliegen, in das digitale MPEG-Fernsehformat um, das von der Set-Top-Box 10 weiter verarbeitet werden kann. Weiterhin hat das Kommunikationsmodul 20 noch eine CI-Schnittstelle 29, die z.B. dem PCMCIA Typ II Extended entspricht, die den Kommunikationsmodul 20 mit der CI-Schnittstelleneinrichtung 12 der Set-Top-Box 10 verbindet und den MPEG-Datenstrom vom Konverter 23 an die CI-Schnittstelleneinrichtung 12 ausgibt. Eine Chipkarten-Schnittstelle 26 des Kommunikationsmoduls 20 nimmt eine in das Kommunikationsmodul 20 eingesteckte Chipkarte bzw. Bankcard 25 auf. Die Bankcard 25 umfaßt eine Zugriffskontrollfunktion für Konto-Transaktionen über das Internet bzw. World-Wide-Web.

Die tragbare Bedieneinrichtung 40 umfaßt eine Bedieneinheit mit alphanumerischer Tastatur 42, einem Cursortastenblock 44, einer Auslösetaste 45, einer Umschalttaste 46 und einem Trackball 48, ein Display 49, das z.B. die aktuelle Funktion der tragbaren Bedieneinrichtung 40 anzeigt, eine Infrarot-Sende/Empfangs-Einrichtung 43 zum Senden und Empfangen von Infrarotsignalen 41 zu bzw. von dem Kommunikationsmodul 20 und eine Chipkarte-Schnittstelle (nicht gezeigt), die mit einer in die tragbare Bedieneinrichtung 40 eingesteckten Chipkarte 47 verbindet.

Durch Betätigung des Trackballs 48 kann der Benutzer der tragbaren Bedieneinrichtung 40 einen Zeiger 56 auf dem Bildschirm 52 der Anzeigeeinrichtung 50 nach Art einer Maus bewegen und Positionieren. Mit der Auslösetaste 45 kann eine Anzeigeinformation, auf die der Zeiger 56 mittels des Trackballs 48 positioniert wurde, bestätigt werden. Mit der Umsschalttaste 46 kann von einem Internet-Modus der tragbaren Bedieneinrichtung 40 in einen Fernseh-Befehlsmodus der tragbaren Bedieneinrichtung 40 und umgekehrt gewechselt werden. Mit der alphanumerischen Tastatur 42 können beliebige Adressen, z.B. für das World Wide Web, und Steuerbefehle und Daten eingegeben werden. Auf der Chipkarte 47 ist eine zugriffskontrolle auf eine Bestellund Bezahlfunktion implementiert. Die Software zur Steuerung und Anzeige des Zeigers 56 ist in der Steuereinheit 28 des Kommunikationsmoduls 20 implementiert.

Die tragbare Bedieneinrichtung 40 hat eine Verschlüsselungseinrichtung bzw. Verschlüsselungsfunktion, die die von der tragbaren Bedieneinrichtung 40 erzeugten Bezahl- und/oder Bestellinformationen, Zeigerinformationen, Auslöseinformationen usw. als Steuerinformationen verschlüsselt. Diese Verschlüsselungsfunktion wird von der Steuereinheit der tragbaren Bedieneinrichtung zusammen mit einer entsprechenden Verschlüsselungs/Entschlüsselungs-Software geleistet. Die verschlüsselten Steuerinformationen werden von der Infrarot-Sende/Empfangs-Einheit 43 der tragbaren Bedieneinrichtung 40 in entsprechende Infrarotsignale 41 umgesetzt, die wiederum von der Infrarot-Sende/Empfangs-Einheit 22 des Kommunikationsmoduls 20 empfangen werden. Die Steuereinheit 28 entschlüsselt die verschlüsselten Steuerinformationen für die weitere Verarbeitung. Hierfür ist eine Entschlüsselungs-Software in der Steuereinheit 28 eingerichtet. Umgekehrt werden Nachrichten, die von dem Kommunikationsmodul 20 zur tragbaren Bedieneinrichtung 40 gesendet werden sollen, zuerst von der Steuereinheit 28 des Kommunikationsmoduls 20 verschlüsselt und als verschlüsselte Nachrichten von der Infrarot-Sende/Empfangs-Einheit 22 in einem Infrarot-Signal zur tragbaren Bedieneinrichtung 40 gesendet. Dort werden die empfangenen Infrarot-Signale von der Infrarot-Sende/Empfangs-Einheit 43 der tragbaren Bedieneinrichtung 40 in verschlüsselte Steuerinformationen umgesetzt, die dann wiederum durch eine entsprechende Entschlüsselungsfunktion, die in der Verarbeitungseinrichtung bzw. Steuereinheit der tragbaren Bedieneinrichtung 40 implementiert ist, entschlüsselt werden.

Will der Benutzer z.B. über das Internet etwas bestellen, schaltet er die tragbare Bedieneinrichtung 40 zuerst mit Hilfe der Umschalttaste 46 in den Internet-Modus. Die tragbare Bedieneinrichtung 40 erzeugt dabei entsprechende Steuerinformationen, die über die Infrarotübertragungsstrecke zwischen der Bedieneinrichtung 40 und dem Kommunikationsmodul 20 übertragen und von der Steuereinheit 28 des Kommunikationsmoduls 20 verarbeitet werden. Die Steuereinheit 28 des Kommunikationsmoduls 20 baut daraufhin unter Verwendung ihres Betriebssystems und der Internet-Software, d.h. des Browsers, und des Datenfunkmodems 24 eine Kommunikationsverbindung zu einem Internet-Provider bzw. zum Internet auf. Der Benutzer gibt dann an der alphanumerischen Tastatur 42 der tragbaren Bedieneinrichtung 40 eine Internet-Adresse oder World Wide Web-Adresse ein, die wiederum von der tragbaren Bedieneinrichtung 40 zum Kommunikationsmodul 20 gesendet und dort über den Browser und über das Funkdatenmodem 24 aufgerufen wird. Über das Funkdatenmodem 24 empfängt der Kommunikationsmodul 20 die von der aufgerufenen Adresse oder HTTP-Seite zurückgegebenen Daten, die über den Dekompressor 21 in ein digitales, dekomprimiertes Format umgesetzt werden, das auf dem Monitor eines PCs dargestellt werden könnte. Die dekomprimierten Daten der empfangenen Homepage werden anschließend von dem Konverter 23 des Kommunikationsmoduls 20 von dem vorliegenden Personal Computer-Datenformat in das digitale MPEG-2-Fernsehdatenformat umgesetzt. Die Homepage im digitalen MPEG-2-Fernsehdatenformat wird anschließend über die CI-Schnittstelle 29 des Kommunikationsmoduls 20 unter Steuerung der Steuereinheit 28 bzw. des Internet-Computers an die DVB-CI-Schnittstelleneinrichtung 12 der Set-Top-Box 10 ausgegeben. Dieses digitale Fernsehdatensignal, das den Daten der angeforderten Homepage entspricht, wird von der zentralen Steuereinheit 13 der Set-Top-Box 10 von einem Fernsehsignal-Digital/-. Analog-Umsetzer (nicht gezeigt) der Set-Top-Box 10 in ein analoges RGB-Signal umgesetzt, das dem Fernsehgerät 50 als Anzeigeeinrichtung über ein SCART-Kabel zugeführt wird und von diesem als World Wide Web-Seite oder Homepage angezeigt wird.

In der Figur 1 sind mehrere Felder, nämlich ein Bezahlfeld 54 und Bestellfelder 55, der auf dem Bildschirm 52 der Anzeigeeinrichtung 50 angezeigten Web-Seite oder Homepage dargestellt. Der Benutzer betätigt nun den Trackball 48 der tragbaren Bedieneinrichtung 40 und bewegt den Zeiger 56 auf dem Bildschirm 52 auf ein bestimmtes Bestellfeld 55, das das Produktl angibt, das der Benutzer bestellen will. Anschließend betätigt er die Auslösetaste 45 der tragbaren Bedieneinrichtung 40, um die Bestellung zu bestätigen. Die bei der Bestellung erzeugten Zeigerpositionsinformationen und Bestätigungsinformationen bzw. Auslöseinformationen werden wieder über die Infrarotstrecke zum Kommunikationsmodul 20 übertragen. Dort werden sie von der Steuereinheit 28 mittels der eingerichteten Maussoftware in eine Bewegung des Zeigers 56 auf der Anzeigeeinrichtung 50 umgesetzt, soweit die Zeigerinformationen getroffen sind. Die Bestätigungs- und Zeigerinformationen werden von der Steuereinheit 28 dem Datenfunkmodem 24 zugeführt, das den Informationen entsprechende Signale als Rückantwort zur Adresse der aufgerufenen Homepage zurücksendet. Anschließend betätigt der Benutzer wiederum den Trackball 48 der tragbaren Bedieneinrichtung 40 um den Zeiger 56 nun auf das Bezahlfeld 54 zu bewegen und zu positionieren. Der Benutzer bestätigt dann die Bezahlung des zuvor bestellten Produkts mittels der Auslösetaste 45. Die Steuerinformationen für die Bestellung und Bezahlung können nur erzeugt werden, wenn die Chipkarte 47, die eine Bezahl- und Bestellautorisierung als Zugriffskontrollfunktion umfaßt, in die tragbare Bedieneinrichtung 40 eingesteckt ist. Nachdem die Bezahlinformationen über die Infrarotstrecke zum Kommunikationsmodul 20 gelangt sind und von dessen Steuereinheit 28 verarbeitet wurden, gibt die Steuereinheit 28 über den eingerichteten Browser und das Datenfunkmodem 24 die Bestätigung der Bezahlung an die besagte Homepage-Adresse aus.

Anschließend baut die Steuereinheit 28 bzw. der Internetcomputer aufgrund der Bezahl-Bestätigung durch den Benutzer eine World Wide Web-Kommunikationsverbindung mit der Bank des Benutzers auf, um eine Internet-Bezahltransaktion zur Bezahlung des bestellten Produkts durchzuführen. Hierzu baut die Steuereinheit 28 des Kommunikationsmoduls 20 eine Verbindung zur Web-Seite bzw. Homepage der Bank des Benutzers auf. Die Internet-Transaktion wird durch die in dem Kommunikationsmodul 20 eingesteckte Bankcard 25 ermöglicht, die entsprechende Transaktions-Autorisierungen als Zugriffsfunktion umfaßt.

Will der Benutzer dagegen das digitale Fernsehen auf der Anzeigeeinrichtung 50, z.B. die Programmauswahl, steuern, betätigt er die Umschalttaste 46 auf der Bedieneinheit der tragbaren Bedieneinrichtung 40 und schaltet sie in den Fernsehmodus um. Diese Umschaltung wird mittels entsprechender Steuerinformationen über die Infrarotstrecke der Steuereinheit 28 des Kommunikationsmoduls 20 mitgeteilt, die daraufhin sämtliche ankommenden Steuerinformationen als Fernseh-Steuerbefehle über die CI-Schnittstelle 29 und die CI-Schnittstelleneinrichtung 12 der Set-Top-Box 10 zur Steuerung der Fernsehfunktion zuführt.

In der Figur 3 ist das Kommunikationsmodul 20, das in dem multimedialen System nach den Figuren 1 und 2 verwendet wird, zusammen mit der Bankcard 25 dargestellt. Das Kommunikationsmodul 20 kann optional ein SAM-Modul 30 haben, um eine abgesicherte Geräteidentifikation insbesondere für Banking oder E-Kommerz zu unterstützen.

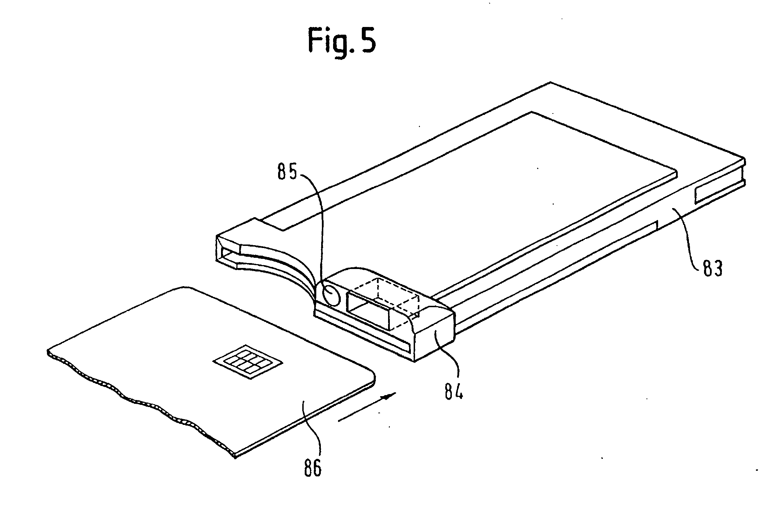

In der Figur 4 ist eine weitere Ausführungsform des Kommunikationsmoduls dargestellt. Das Kommunikationsmodul 81 ist ebenfalls als steckbare PC-Karte ausgeführt und für die Aufnahme einer Multimedia-Karte 80 ausgelegt. Es verfügt ebenfalls über eine Infrarot-Schnittstelle 85 und eine Datenfunkmodem-Schnittstelle, wie der Kommunikationsmodul 20 der Figur 3.

In der Figur 5 ist eine dritte Ausführungsform des Kommunikationsmoduls dargestellt. Das gezeigte Kommunikationsmodul 83 ist mit einem Telefonmodem auf ISDN-Basis ausgestattet und hat einen Telefonsteckverbinder 84 zum Einstecken eines Telefonkabels. Das Kommunikationsmodul 83 hat auch eine Infrarot-Schnittstelle 85, die eingehend mit Bezug auf dem Kommunikationsmodul 20 der Figuren 1 bis 3 erläutert wurde. In den Kommunikationsmodul 83 läßt sich eine Chipkarte 86 mit Zugriffskontrollfunktion einstecken.

Das multimediale System kann simultan mit zwei aktivierten Zugriffskontrollmodulen betrieben werden, die durch die tragbare Bedieneinrichtung gesteuert werden. Ein erster Zugriffskontrollmodul ist ein CAS-Modul und ein zweiter Modul ein Internet-Computer, der die Überlagerung der Browser-Information über die TV-Video-Daten (Fernsehbild) des CAS-Moduls unterstützen kann. Die beiden Datenströme, Video-Daten und Internet-Daten können interagieren und so individuelle Shopping-Szenarien oder auch Klassen von Szenarien (z.B. Loyalty Szenarium, Premium User Szenarium, interaktive Spieleszenarien) generieren. Der Internet- und der TV-Datenstrom werden zeitlich korrelliert, wobei die individuelle Komponente jeweils durch den individuellen Internetzugang, das Anwenderprofil, bestimmt ist. Der Internet-Kanal ist Vorwärts- und Rückwärtskanal zugleich.

## Patentansprüche

1. Multimediales System mit einer Anzeigeeinrichtung (50), einer Basisstation, die eine Empfangseinrichtung für multimediale Sendungen beinhaltet und mit der Anzeigeeinrichtung (50) verbunden ist, und einer drahtlosen Fernbedieneinrichtung (40), wobei die Basisstation (10) mehrere Common Interface (CI) PC (Personal Computer) Kartenanschlüsse mit zugehöriger Hardware- und Softwarefunktionalität aufweist, **dadurch gekennzeichnet, daß** das System darüber hinaus ein Kommunikationsmodul (20; 81; 83) im PC-Karten-Format umfaßt, das ein Modern (24) mit einer Schnittstelle zur Verbindung mit dem Internet, einen Internet-Computer, eine drahtlose Verbindung zu der Fernbedieneinrichtung (40) zur direkten Steuerung des Internet-Computers durch die Fernbedieneinrichtung (40) und einen Konverter (23) zur Umsetzung der über das Modem (24) aus dem Internet empfangenen Daten in ein digitales MPEG-Fernsehformat beinhaltet.

2. Multimediales System nach Anspruch 1, **dadurch gekennzeichnet, daß** die Fernbedieneinrichtung (40) und das Kommunikationsmodul (20; 81; 83) zur verschlüsselten Übertragung von Daten wenigstens von der Fernbedieneinrichtung (40) zu dem Kommunikationsmodul (20; 81; 83) Mittel zur Verschlüsselung und Entschlüsselung beinhalten.

3. Multimediales System nach Anspruch 1, **dadurch gekennzeichnet, daß** das Kommunikationsmodul (20; 81; 83) und die Fernbedieneinrichtung (40) jeweils ein CAM-Modul (Conditional Access Module) (60) beinhalten, welches einen Chipkarten-Leser enthält.

4. Multimediales System nach Anspruch 1, **dadurch gekennzeichnet, daß** das Modem (24) eine Schnittstelle zur drahtlosen Verbindung mit dem Internet aufweist.

5. Multimediales System nach Anspruch 1, **dadurch gekennzeichnet, daß** der Internet-Computer eine JAVA-Maschine enthält.

6. Multimediales System nach Anspruch 1, **dadurch gekennzeichnet, daß** die Fernbedieneinrichtung (40) mit einem Fingerabdruck-Sensor zur Benutzeridentifikation ausgestattet ist.

7. Multimediales System nach Anspruch 1, **dadurch gekennzeichnet, daß** die Fernbedieneinrichtung (40) Steuerinformationen erzeugt und in Form eines Steuersignals ausgibt, wobei die Steuerinformation eine Information auswählt, die auf der Anzeigeeinrichtung (50) angezeigt wird.

8. Multimediales System nach Anspruch 1, **dadurch gekennzeichnet, daß** die Fernbedieneinrichtung (40) zur Erzeugung von Zeigerpositionsinformation und zur Auswahl von Steuerinformation eine Eingabeeinheit (42, 44, 45, 46, 48) aufweist, wobei der Zeiger mit Hilfe der Zeigerpositionsinformation auf einem Bildschirm (52) der Anzeigevorrichtung (50) positioniert werden kann, um mit dem Zeiger eine bestimmte Anzeigeinformation der Anzeigevorrichtung (50) auszuwählen und die Position des Zeigers durch die Auswahlinformation bestätigt wird.

9. Multimediales System nach Anspruch 8, **dadurch gekennzeichnet, daß** die Eingabeeinheit (42, 44, 45, 46, 48) der Fernbedieneinrichtung (40) zur Erzeugung der Zeigerpositionsinformation eine Trackballeinrichtung (48) beinhaltet.

10. Multimediales System nach Anspruch 8, **dadurch gekennzeichnet, daß** die Fernbedieneinrichtung (40) eine Enter-Taste (45) zur Erzeugung der Auswahlinformation aufweist.

11. Multimediales System nach Anspruch 8, **dadurch gekennzeichnet, daß** die Eingabeeinheit (42, 44, 45, 46, 48) der Fernbedieneinrichtung (40) zur Erzeugung der Zeigerpositionsinfonnation einen Cursor-Tastenblock (44) enthält.

12. Multimediales System nach Anspruch 1, **dadurch gekennzeichnet, daß** elektronische Zahlungsfunktionen in der Fernbedieneinrichtung (40) implementiert sind.

13. Multimediales System nach Anspruch 12, **dadurch gekennzeichnet, daß** die elektronischen Zahlungsfunktionen mit Hilfe einer austauschbaren Chipkarte (47) implementiert sind.

14. Multimediales System nach Anspruch 2, **dadurch gekennzeichnet, daß** das Verschlüsselungsmittel auf einer austauschbaren Chipkarte (47) angeordnet ist.

15. Multimediales System nach Anspruch 1, **dadurch gekennzeichnet, daß** die Fernbedieneinrichtung (40) benutzerdefinierte Steuersignale zur Steuerung des Internet-Computers erzeugt.

16. Multimediales System nach Anspruch 1, **dadurch gekennzeichnet, daß** das Kommunikationsmodul (20; 81; 83) und die Fernbedieneinrichtung (40) jeweils ein Benutzeridentifikations-Modul (30) beinhalten.

17. Multimediales System nach Anspruch 1, **dadurch gekennzeichnet, daß** die Basisstation (10) eine Set-Top-Box ist, die mit einem Fernsehgerät (50) verbunden ist.

## Claims

1. A multimedia system comprising a display device (50), a base station including a receiving device for multimedia transmissions and connected to the display device (50), and a wireless remote control device (40), the base station (10) including a plurality of Common Interface (CI) PC (personal computer) card terminals with associated hardware and software functionality, **characterized in that** the system further comprises a communication module (20; 81; 83) in PC card format, which incorporates a modem (24) having an interface for connection to the Internet, an Internet computer, a wireless connection to the remote control device (40) for direct control of the Internet computer by the remote control device (40), and a converter (23) for converting the data received from the Internet via the modem (24) into a digital MPEG television format.

2. The multimedia system according to claim 1, **characterized in that** the remote control device (40) and the communication module (20; 81; 83) include means for encrypting and decrypting for encrypted transfer of data at least from the remote control device (40) to the communication module (20; 81; 83).

3. The multimedia system according to claim 1, **characterized in that** the communication module (20; 81; 83) and the remote control device (40) each include a CAM module (Conditional Access Module) (60) containing a chip card reader.

4. The multimedia system according to claim 1, **characterized in that** the modem (24) has an interface for wireless connection to the Internet.

5. The multimedia system according to claim 1, **characterized in that** the Internet computer contains a JAVA engine.

6. The multimedia system according to claim 1, **characterized in that** the remote control device (40) is provided with a fingerprint sensor for user identification.

7. The multimedia system according to claim 1, **characterized in that** the remote control device (40) generates control information and outputs it in the form of a control signal, the control information selecting an information displayed on the display device (50).

8. The multimedia system according to claim 1, **characterized in that** the remote control device (40) has an input unit (42, 44, 45, 46, 48) for generating pointer position information and for selecting control information, the pointer being able to be positioned on a screen (52) of the display device (50) with the aid of the pointer position information in order to select a specific display information of the display device (50) by means of the pointer, and the position of the pointer being confirmed by the selection information.

9. The multimedia system according to claim 8, **characterized in that** the input unit (42, 44, 45, 46, 48) of the remote control device (40) includes a track ball device (48) for generating the pointer position information.

10. The multimedia system according to claim 8, **characterized in that** the remote control device (40) includes an enter key (45) for generating the selection information.

11. The multimedia system according to claim 8, **characterized in that** the input unit (42, 44, 45, 46, 48) of the remote control device (40) contains a cursor key block (44) for generating the pointer position information.

12. The multimedia system according to claim 1, **characterized in that** electronic payment functions are implemented in the remote control device (40).

13. The multimedia system according to claim 12, **characterized in that** the electronic payment functions are implemented with the aid of an exchangeable chip card (47).

14. The multimedia system according to claim 2, **characterized in that** the encrypting means is arranged on an exchangeable chip card (47).

15. The multimedia system according to claim 1, **characterized in that** the remote control device (40) generates user-defined control signals for controlling the Internet computer.

16. The multimedia system according to claim 1, **characterized in that** the communication module (20; 81; 83) and the remote control device (40) each include a user identification module (30).

17. The multimedia system according to claim 1, **characterized in that** the base station (10) is a set top box connected to a television set (50).

## Revendications

1. Système multimédial comportant un dispositif d'affichage (50) une station de base qui contient un dispositif de réception pour des émissions multimédiales et qui est reliée avec le dispositif d'affichage (50), et un dispositif de télécommande (40), la station de base (10) présentant plusieurs connexions de cartes Common Interface (CI) PC (Personal Computer) avec fonctionnalité associée de matériel et de logiciel, **caractérisé en ce que** le système comprend en outre un module de communication (20 ; 81 ; 83) dans le format de cartes de PC, qui contient un modem (24) avec une interface pour la liaison avec l'Internet, un ordinateur d'Internet, une connexion sans fil avec le dispositif de télécommande (40) pour commander directement l'ordinateur d'Internet au moyen du dispositif de télécommande (40), et un convertisseur (23) pour convertir les données reçues de l'Internet via le modem (24) en un format télévisé numérique MPEG.

2. Système multimédial selon la revendication 1, **caractérisé en ce que** le dispositif de télécommande (40) et le module de communication (20 ; 81 ; 83) contiennent des moyens de codage et de décodage pour la transmission codée de données au moins depuis le dispositif de télécommande (40) vers le module de communication (20 ; 81 ; 83).

3. Système multimédial selon la revendication 1, **caractérisé en ce que** le module de communication (20 ; 81 ; 83) et le dispositif de télécommande (40) contiennent chacun un module CAM (Conditional Access Module) (60) qui comporte un lecteur de cartes à puce.

4. Système multimédial selon la revendication 1, **caractérisé en ce que** le modem (24) présente une interface pour la liaison sans fil avec l'Internet.

5. Système multimédial selon la revendication 1, **caractérisé en ce que** l'ordinateur d'Internet contient un moteur JAVA.

6. Système multimédial selon la revendication 1, **caractérisé en ce que** le dispositif de télécommande (40) est équipé d'un détecteur d'empreinte digitale pour l'identification de l'utilisateur.

7. Système multimédial selon la revendication 1, **caractérisé en ce que** le dispositif de télécommande (40) engendre des informations de commande et les fournit sous forme d'un signal de commande, l'information de commande sélectionnant une information qui est affichée sur le dispositif d'affichage (50).

8. Système multimédial selon la revendication 1, **caractérisé en ce que** le dispositif de télécommande (40) présente une unité d'entrée (42, 44, 45, 46, 48) pour engendrer l'information de la position du pointeur et pour sélectionner l'information de commande, le pointeur pouvant être positionné sur un écran (52) du dispositif d'affichage (50) à l'aide de l'information de la position du pointeur, pour sélectionner avec le pointeur une information d'affichage déterminée du dispositif d'affichage (50) et **en ce que** la position du pointeur est confirmée par l'information de sélection.

9. Système multimédial selon la revendication 8, **caractérisé en ce que** l'unité d'entrée (42, 44, 45, 46, 48) du dispositif de télécommande (40) contient un dispositif à boule de pointage (48) pour produire l'information de la position du pointeur.

10. Système multimédial selon la revendication 8, **caractérisé en ce que** le dispositif de télécommande (40) présente une touche entrée (45) pour produire l'information de sélection.

11. Système multimédial selon la revendication 8, **caractérisé en ce que** l'unité d'entrée (42, 44, 45, 46, 48) du dispositif de télécommande (40) contient un bloc de touches de curseur (44) pour produire l'information de la position du pointeur.

12. Système multimédial selon la revendication 1, **caractérisé en ce que** des fonctions de paiement électronique sont implémentées dans le dispositif de télécommande (40).

13. Système multimédial selon la revendication 12, **caractérisé en ce que** les fonctions de paiement électronique sont implémentées à l'aide d'une carte à puce (47) interchangeable.

14. Système multimédial selon la revendication 2, **caractérisé en ce que** le moyen de codage est agencé sur une carte à puce (47) interchangeable.

15. Système multimédial selon la revendication 1, **caractérisé en ce que** le dispositif de télécommande (40) engendre des signaux de commande définis par l'utilisateur pour commander l'ordinateur d'Internet.

16. Système multimédial selon la revendication 1, **caractérisé en ce que** le module de communication (20 ; 81 ; 83) et le dispositif de télécommande (40) contiennent chacun un module d'identification d'utilisateur (30).

17. Système multimédial selon la revendication 1, **caractérisé en ce que** la station de base (10) est une Set Top Box qui est reliée à un téléviseur (50).
